# FASCICULE DE BREVET EUROPEEN

(11) **EP 3 178 093 B1**
(45) Date de publication et mention de la délivrance du brevet: **21.10.2020**
(21) Numéro de dépôt: 15736562.8
(22) Date de dépôt: 22.06.2015
(51) Int. Cl.: H01B 3/44, C08K 5/16

(54) **CÂBLE COMPRENANT UNE COUCHE RÉTICULÉE**
KABEL MIT VERNETZTER SCHICHT
CABLE COMPRISING A CROSSLINKED LAYER

(30) Priorité: 07.08.2014 FR 1457680
(43) Date de publication de la demande: 14.06.2017
(73) Titulaire: Nexans, 92400 Courbevoie (FR)
(72) Inventeur: KEROMNES, Laurent, F-69630 Chaponost (FR); ABEGUILE, Mikael, F-69400 Villefranche-sur-Saône (FR); PETITET, Laurent, F-42330 Saint Galmier (FR)
(74) Mandataire: Ipsilon
(86) Numéro de dépôt international: PCT/FR2015/051655
(87) Numéro de publication internationale: WO 2016/020583

(56) Documents cités:
- EP-A2- 0 490 854
- EP-A2- 1 340 788
- WO-A1-2007/107667
- WO-A1-2012/052077

## Description

La présente invention se rapporte à un câble comprenant au moins une couche réticulée.

Elle s'applique typiquement, mais non exclusivement, aux domaines des câbles d'énergie à basse tension (notamment inférieure à 6kV), à moyenne tension (notamment de 6 à 45-60 kV) ou à haute tension (notamment supérieur à 60 kV, et pouvant aller jusqu'à 800 kV), qu'ils soient à courant continu ou alternatif.

Les câbles d'énergie comprennent typiquement un conducteur électrique central et au moins une couche électriquement isolante réticulée par des techniques bien connues de l'homme du métier, notamment par voie peroxyde.

La voie peroxyde tend de plus en plus à être évitée par rapport aux produits de décomposition du peroxyde, présentant des inconvénients lors de la fabrication du câble, voire même une fois le câble en configuration opérationnelle. En effet, lors de la réticulation, les peroxydes se décomposent et forment des sous-produits de réticulation tels que notamment du méthane, de l'acétophénone, de l'alcool cumylique, de l'acétone, du tertiobutanol, de l'alpha-méthyle styrène et/ou de l'eau. La formation d'eau à partir d'alcool cumylique est relativement lente et peut se produire après plusieurs mois, voire quelques années une fois que le câble est en configuration opérationnelle. Le risque de claquage des couches réticulées est ainsi augmenté de façon significative. En outre, si le méthane formé au cours de l'étape de réticulation n'est pas évacué des couches réticulées, des risques liés à l'explosivité du méthane et sa capacité à s'enflammer ne doivent pas être ignorés. Ce gaz peut également occasionner des dégâts une fois le câble mis en service. Même si des solutions existent pour limiter la présence de méthane au sein du câble, telles que par exemple traiter le câble thermiquement afin d'accélérer la diffusion de méthane en dehors du câble, elles deviennent longues et coûteuses lorsque l'épaisseur des couches réticulées est importante.

A titre d'exemple de procédé de réticulation n'utilisant pas la voie peroxyde, on peut citer le document EP-2 001 912 qui décrit un câble électrique comprenant un élément électriquement conducteur allongé entouré par au moins une couche réticulée obtenue à partir d'une composition photoréticulable comprenant un matériau polymère, un photoamorceur, et un agent réticulant du type triméthoxysilane.

Toutefois, il existe toujours une forte demande pour fournir de nouvelles compositions réticulées pour câble, respectueuse de l'environnement, et présentant des propriétés mécaniques et une mise en œuvre optimisées, notamment pour des applications dans le domaine des câbles moyenne ou haute tension.

Le but de la présente invention est de pallier les inconvénients des techniques de l'art antérieur en proposant un câble comprenant une couche réticulée dont la fabrication est respectueuse de l'environnement et limite de façon significative la présence de sous-produits de réticulation, comme par exemple le méthane et/ou l'eau, tout en garantissant des propriétés mécaniques (résistance à la traction et allongement à la rupture) optimales au cours de la vie du câble.

La présente invention a pour objet un câble comprenant un élément électriquement conducteur allongé entouré par au moins une couche réticulée obtenue à partir d'une composition photoréticulable comprenant :
- au moins un matériau polymère (A),
- au moins un photoamorceur (B), et
- au moins un agent réticulant (C),
caractérisé en ce que l'agent réticulant (C) comprend au moins une fonction imide.

### L'agent réticulant (C)

L'agent réticulant de l'invention comprend au moins une fonction imide, ou en d'autre termes un radical ammonium lié à deux groupes carbonyles (R-C=O).

Plus particulièrement, l'agent réticulant C peut être un imide secondaire cyclique.

De préférence, l'agent réticulant C peut être aromatique, et plus particulièrement comprendre un ou plusieurs groupements phényle.

A titre d'exemple, l'agent réticulant peut être un dérivé du maléimide, et de préférence un dérivé du bismaléimide (ou dimaléimide). On peut citer notamment comme exemple préféré le N,N'-1,3-phenylene bismaléimide.

La composition photoréticulable de l'invention peut comprendre une quantité suffisante d'agent de réticulation C pour pouvoir réaliser la réticulation du matériau polymère A.

A titre d'exemple, la composition photoréticulable de l'invention peut comprendre au moins 0,1 partie en poids d'agent de réticulation C pour 100 parties en poids de matériau polymère dans la composition, et de préférence au moins 0,5 partie en poids d'agent de réticulation C pour 100 parties en poids de matériau polymère dans la composition.

La composition photoréticulable de l'invention peut comprendre au plus 15,0 parties en poids d'agent de réticulation C pour 100 parties en poids de matériau polymère dans la composition, et de préférence au plus 10,0 parties en poids d'agent de réticulation C pour 100 parties en poids de matériau polymère dans la composition.

### Le matériau polymère (A)

Le matériau polymère de l'invention peut comprendre un ou plusieurs polymère(s), le terme polymère pouvant s'entendre par tout type de polymère bien connu de l'homme du métier tel que homopolymère ou copolymère (e.g. copolymère séquencé, copolymère statistique, terpolymère, ...etc).

Le polymère peut être du type thermoplastique ou élastomère, et peut être réticulé par voie photochimique ou actinique, notamment par rayonnements ultra-violet, ces techniques étant bien connues de l'homme du métier.

Dans un mode de réalisation particulier, le matériau polymère, ou en d'autres termes la matrice polymère de la composition photoréticulable, peut comprendre un ou plusieurs polymères d'oléfine, et de préférence un ou plusieurs polymères d'éthylène. Un polymère d'oléfine est classiquement un polymère obtenu à partir d'au moins un monomère d'oléfine.

Plus particulièrement, le matériau polymère peut comprendre plus de 30% en poids de polymère(s) d'oléfine, de préférence plus de 50% en poids de polymère(s) d'oléfine, de préférence plus de 70% en poids de polymère(s) d'oléfine, et de façon particulièrement préféré plus de 90% en poids de polymère(s) d'oléfine, par rapport au poids total de matériau polymère. De préférence, le matériau polymère est uniquement composé d'un ou de plusieurs polymère(s) d'oléfine.

A titre d'exemple, le matériau polymère de l'invention peut comprendre un ou plusieurs polymères d'oléfine choisis parmi un polyéthylène linéaire basse densité (LLDPE); un polyéthylène très basse densité (VLDPE); un polyéthylène basse densité (LDPE); un polyéthylène moyenne densité (MDPE); un polyéthylène haute densité (HDPE); un copolymère élastomère d'éthylène-propylène (EPR); un terpolymère éthylène propylène diène monomère (EPDM); un copolymère d'éthylène et de vinyl ester tel qu'un copolymère d'éthylène et d'acétate de vinyl (EVA); un copolymère d'éthylène et d'acrylate tel qu'un copolymère d'éthylène et d'acrylate de butyle (EBA) ou un copolymère d'éthylène et d'acrylate de méthyle (EMA); un copolymère d'éthylène et d'alpha-oléfine tel qu'un copolymère d'éthylène et d'octène (PEO) ou un copolymère d'éthylène et de butène (PEB); un polymère d'oléfine fonctionnalisé ; et un de leurs mélanges.

Le polymère d'oléfine fonctionnalisé peut comprendre des fonctions époxy, notamment du type oxyde d'éthylène (i.e. fonction oxirane), et plus particulièrement des fonctions ester de glycidyle.

Le polymère d'oléfine fonctionnalisé comprenant des fonctions époxy peut comprendre de 0,1 à 10% en poids de fonction époxy, et de préférence de 1% à 5% en poids de fonction époxy.

Le polymère d'oléfine fonctionnalisé comprenant des fonctions époxy peut être un copolymère d'oléfine, notamment d'éthylène, et d'un monomère choisi parmi les composés suivants : monoglycidylester d'acide butène carboxylique, méthacrylate de glycidyle, acrylate de glycidyle, acrylate de méthylglycidyle, méthacrylate de méthylglycidyle, glycidester d'acide itaconique, méthacrylate de 7,8-epoxy-1-octyl, méthylglycidester d'acide itaconique, éther vinylique 7,8-epoxy-1-octyl, éther glycidylique de vinyle, éther allylglycidique et éther glycidylique de 2-methyl-2-propenyl.

A titre d'exemple, on peut citer comme polymère d'oléfine fonctionnalisé comprenant des fonctions époxy le copolymère d'éthylène et de méthacrylate de glycidyle.

La composition photoréticulable de l'invention peut comprendre au moins 30 % en poids de matériau polymère, de préférence au moins 50 % en poids de matériau polymère, de préférence au moins 80% en poids de matériau polymère, et de préférence au moins 90% en poids de matériau polymère, par rapport au poids total de la composition.

### Le photoamorceur (B)

Le photoamorceur B de l'invention peut être choisi parmi les benzophénones, les acétophénones, les benzoin éthers, les benziles, les benzyl cetals, les benzoyl oximes, les aminobenzoates, les aminocétones, les hydroxycétones, les éthylamines, les éthanolamines, les alkylphénones, les anthracènes, les anthraquinones, les anthrachinones, les xanthones, les thioxanthones, les quinones, les fluorénones, les peroxydes, les acylphosphine oxides, et un de leurs dérivés.

Le photoamorceur B de l'invention peut être avantageusement une cétone aromatique, et de préférence une cétone aromatique comprenant au moins deux groupements phényle.

A titre d'exemple de photoamorceurs B préférés du type cétone aromatique, on peut citer la dibenzosubérone, l'anthrone, la benzoanthrone, la 9-fluorénone, la benzophénone, ou un de leurs dérivés.

La composition photoréticulable de l'invention peut comprendre une quantité suffisante de photoamorceur B pour pouvoir obtenir les propriétés désirées.

A titre d'exemple, la composition photoréticulable de l'invention peut comprendre au moins 0,1 partie en poids d'agent de photoamorceur B pour 100 parties en poids de matériau polymère dans la composition, et de préférence au moins 0,5 partie en poids de photoamorceur B pour 100 parties en poids de matériau polymère dans la composition.

La composition photoréticulable de l'invention peut comprendre au plus 10,0 parties en poids d'agent de photoamorceur B pour 100 parties en poids de matériau polymère dans la composition, et de préférence au plus 5,0 parties en poids de photoamorceur B pour 100 parties en poids de matériau polymère dans la composition.

### La composition photoréticulable

La composition photoréticulable est réticulée par des procédés de réticulation bien connus de l'homme du métier, tels que par exemple par voie photochimique ou actinique, notamment par rayonnements ultra-violet.

La composition photoréticulable de l'invention peut comprendre une ou plusieurs charges.

La charge de l'invention peut être une charge minérale ou organique. Elle peut être choisie parmi une charge ignifugeante et une charge inerte (ou charge non combustible).

A titre d'exemple, la charge ignifugeante peut être une charge hydratée, choisie notamment parmi les hydroxydes métalliques tels que par exemple le dihydroxyde de magnésium (MDH) ou le trihydroxyde d'aluminium (ATH). Ces charges ignifugeantes agissent principalement par voie physique en se décomposant de manière endothermique (e.g. libération d'eau), ce qui a pour conséquence d'abaisser la température de la couche réticulée et de limiter la propagation des flammes le long du câble. On parle notamment de propriétés de retard à la flamme, bien connues sous l'anglicisme « *flame retardant ».*

La charge inerte (i.e. charge non combustible) peut être, quant à elle, de la craie, du talc ou de l'argile (e.g. le kaolin).

La charge peut également être une charge électriquement conductrice choisie notamment parmi les charges carbonées. A titre d'exemple on peut citer comme charge électriquement conductrice les noirs de carbones, les graphènes, les nanotubes de carbone.

Selon une première variante, la charge électriquement conductrice pourra être préférée pour obtenir une couche réticulée dite « semi-conductrice », et pourra être introduite dans la composition photoréticulable en une quantité suffisante pour rendre la composition semi-conductrice, cette quantité variant selon le type de charge électriquement conductrice sélectionnées. A titre d'exemple, la quantité appropriée de charge électriquement conductrice peut être comprise entre 8 et 40% en poids dans la composition photoréticulable, pour du noir de carbone ; et peut être de 0,1 à 5% en poids dans la composition photoréticulable, pour des nanotubes de carbones.

Selon une seconde variante, la charge électriquement conductrice pourra être préférée pour obtenir une couche réticulée dite « électriquement isolante », et pourra être utilisée en faible quantité pour améliorer les propriétés diélectriques d'une couche électriquement isolante, sans qu'elle ne devienne semi-conductrice. Dans ce cas, la charge électriquement conductrice peut également servir à colorer la couche et/ou à augmenter la stabilité de la couche aux rayons ultra-violets.

La composition photoréticulable peut comprendre au moins 1% en poids de charge(s), de préférence au moins 10% en poids de charge(s), et de préférence au plus 50% en poids de charge(s), par rapport au poids total de la composition.

La composition peut typiquement comprendre en outre des additifs bien connus de l'homme du métier, notamment en une quantité de 0,1 à 20 % en poids dans la composition photoréticulable. On peut citer par exemple:
- des agents de protection, tels que des antioxydants, des anti-UV, des anti-cuivre, des agents anti-arborescences d'eau,
- des agents de mise en œuvre, tels que des plastifiants, des lubrifiants, des huiles, des cires ou paraffines,
- des agents compatibilisants,
- des agents de couplage tels que des composés à base de silane,
- des retardateurs de grillage,
- des pigments,
- des catalyseurs de réticulation,
- des coagents de réticulation tels que des triallyl cyanurates,
- et un de leurs mélanges.

Plus particulièrement, les antioxydants permettent de protéger la composition des contraintes thermiques engendrées lors des étapes de fabrication du câble ou de fonctionnement dudit câble.

Les antioxydants sont choisis de préférence parmi :
- les antioxydants phénoliques à encombrement stérique tels que le tetrakisméthylene(3,5-di-t-butyl-4-hydroxy-hydrocinnamate) méthane, le octadecyl 3-(3,5-di-t-butyl-4-hydroxyphényle)propionate, le 2,2'-thiodiéthylène bis[3-(3,5-di-t-butyl-4-hydroxyphényle) propionate], le 2,2'-Thiobis(6-t-butyle-4-méthylephénol), le 2,2'-méthylenebis(6-t-butyle-4-méthylphénol), le 1,2-Bis(3,5-di-t-butyle-4-hydroxyhydrocinnamoyl) hydrazine, et le 2,2'-oxamido-bis(éthyl 3(3,5-di-t-butyle-4-hydroxyphényle) propionate) ;
- les thioéthers tels que le 4,6-bis(octylthiométhyle)-o-crésol, le Bis[2-méthyle-4-{3-n-alkyle(C12ouC14)thiopropionyloxy}-5-t-butylphényle]sulfide et le Thiobis-[2-t-butyl-5-méthyle-4,1-phénylène] bis [3-(dodecyltio)propionate] ;
- les antioxydants à base de soufre tels que le Dioctadecyl-3,3'-thiodipropionate ou le Didodecyl-3,3'-thiodipropionate ;
- les antioxydants à base de phosphore tels que les phosphites ou phosphonates comme par exemple le Tris(2,4-di-t-butyl-phényle)phosphite ou le Bis(2,4-di-t-butylphényle) pentaerythritol diphosphite ; et
- les antioxydants de type amine tels que les phénylène diamines (IPPD, 6PPD....), les diphénylamine styrène, les diphénylamines, les mercapto benzimidazoles et le 2,2,4-trimethyl-1,2 dihydroquinoline polymérisé (TMQ), ce dernier type d'antioxydant étant particulièrement préféré dans la composition de l'invention.

Les TMQ peuvent avoir différents grades, à savoir :
- un grade dit « standard » avec un faible degré de polymérisation, c'est-à-dire avec un taux de monomère résiduel supérieur à 1% en poids et ayant une teneur en NaCI résiduelle pouvant aller de 100 ppm à plus de 800 ppm (parties par million massiques) ;
- un grade dit « à haut degré de polymérisation » avec un haut degré de polymérisation, c'est-à-dire avec un taux de monomère résiduel inférieur à 1% en poids et ayant une teneur en NaCI résiduelle pouvant aller de 100 ppm à plus de 800 ppm ;
- un grade dit « à faible teneur en sel résiduel » avec une teneur en NaCI résiduelle inférieure à 100 ppm.

Le type de stabilisant et son taux dans la composition de l'invention sont classiquement choisis en fonction de la température maximale subie par les polymères pendant la production du mélange et pendant leur mise en œuvre, notamment par extrusion, ainsi que selon la durée maximale d'exposition à cette température.

Les catalyseurs de réticulation ont pour but d'aider à la réticulation. Le catalyseur de réticulation peut être choisi parmi les acides de Lewis ; les acides de Brönsted ; et les catalyseurs à base d'étain comme par exemple le dilaurate de dibutylétain (DBTL). Dans un mode de réalisation particulièrement préféré, la composition photoréticulable ne comprend pas de catalyseur de réticulation.

La composition photoréticulable de l'invention peut avantageusement être exempte de composés halogénés et/ou de composés siliconés.

Plus particulièrement, afin de garantir un câble dit « *Halogen-Free* » ou dit plus particulièrement HFFR pour l'anglicisme « *Halogen-Free Flame Retardant* », le câble de l'invention, ou en d'autres termes les éléments qui composent ledit câble, ne comprend/comprennent de préférence pas de composés halogénés. Ces composés halogénés peuvent être de toutes natures, tels que par exemple des polymères fluorés ou des polymères chlorés comme le polychlorure de vinyle (PVC), des plastifiants halogénés, des charges minérales halogénées, ...etc.

Dans un mode de réalisation particulièrement préférée, la composition photoréticulable ne comprend sensiblement pas de sel d'onium. Dans ce mode de réalisation particulier, la composition peut avantageusement se passer de sel d'onium.

On entend par « ne comprend sensiblement pas de sel d'onium », une composition photoréticulable comprenant moins de 0,1% en poids de sel d'onium, de préférence moins de 0,05% en poids de sel d'onium, et de façon particulièrement préférée 0% en poids de sel d'onium, par rapport au poids total de la composition.

Un composé onium, ou ion onium, est classiquement un cation obtenu par protonation d'un hydrure mononucléaire d'un élément choisi dans les groupes 15 (VA), 16 (VIA) ou 17 (VIIA) de la classification périodique des éléments.

A titre d'exemple de sels d'onium, on peut citer les sels de diazonium, d'halonium, d'iodionium, de sulphonium et de sulphoxonium.

Les sels d'onium présentent des propriétés qui peuvent être toxiques pour l'homme, et non respectueuses de l'environnement.

### La couche réticulée

Dans la présente invention, la couche réticulée est obtenue par des procédés de photoréticulation bien connus de l'homme du métier, tels que ceux mentionnés dans la présente description.

La réticulation peut être facilement caractérisée par la détermination de son taux de gel selon la norme ASTM D2765-01 (extraction au xylène). Plus particulièrement, ladite couche réticulée peut avoir avantageusement un taux de gel, selon la norme ASTM D2765-01, d'au moins 30%, de préférence d'au moins 50%, et de préférence d'au moins 70%.

La couche réticulée peut être également caractérisée par la norme NF EN 60811-2-1 (ou « Hot Set Test ») avec un fluage à chaud sous charge (allongement en pourcentage) d'au plus 175%.

Dans la présente invention, la couche réticulée de l'invention peut être avantageusement une couche extrudée le long du câble, par des techniques bien connues de l'homme du métier.

La couche réticulée de l'invention peut être choisie parmi une couche électriquement isolante, une couche semi-conductrice, un élément de bourrage et une gaine de protection. Dans un mode de réalisation particulièrement préférée, la couche réticulée de l'invention est une couche électriquement isolante.

Dans la présente invention, on entend par « couche électriquement isolante » une couche dont la conductivité électrique peut être d'au plus 1.10⁻⁹ S/m (siemens par mètre) (à 25°C).

Dans la présente invention, on entend par « couche semi-conductrice » une couche dont la conductivité électrique peut être d'au moins 1.10⁻⁹ S/m (siemens par mètre), de préférence d'au moins 1.10⁻³ S/m, et de préférence peut être inférieure à 1.10³ S/m (à 25°C).

Lorsque la couche réticulée de l'invention est une couche semi-conductrice, la composition photoréticulable de l'invention peut comprendre une charge électriquement conductrice en une quantité suffisante pour rendre la couche réticulée de l'invention semi-conductrice.

### Le câble

On entend par « câble » un câble électrique et/ou optique, destiné au transport d'énergie et/ou à la transmission de données.

Plus particulièrement, ce type de câble comprend un ou plusieurs élément(s) conducteur(s) allongé(s) du type électrique et/ou optique, entouré(s) par au moins la couche réticulée conforme à l'invention.

Dans la présente invention, la couche réticulée peut entourer un ou plusieurs élément(s) conducteur(s) allongé(s), isolé(s) ou non, le long du câble.

L'élément conducteur allongé peut être de préférence en position central (en coupe transversale du câble) dans le câble.

Dans un mode de réalisation particulièrement préféré, le câble de l'invention est un câble électrique comprenant un ou plusieurs éléments conducteurs électriques allongés.

Selon une première variante, la couche réticulée peut être directement en contact physique avec le conducteur électrique allongé. On parle dans cette première variante de câble basse tension.

Selon une deuxième variante, la couche réticulée peut être au moins l'une des couches d'un système isolant comprenant :
- une première couche semi-conductrice entourant le conducteur électrique allongé,
- une couche électriquement isolante entourant la première couche semi-conductrice, et
- une deuxième couche semi-conductrice entourant la couche électriquement isolante.

On parle dans cette deuxième variante de câble moyenne ou haute tension.

Dans cette deuxième variante, la couche réticulée de l'invention est de préférence uniquement la couche électriquement isolante.

Le conducteur électrique allongé peut être un conducteur monocorps tel que par exemple un fils métallique, ou un conducteur multicorps tel qu'une pluralité de fils métallique torsadés ou non.

Le conducteur électrique allongé peut être réalisé à partir d'un matériau métallique notamment choisi parmi l'aluminium, un alliage d'aluminium, du cuivre, un alliage de cuivre, et une de leurs combinaisons.

Un autre objet de l'invention concerne un procédé de fabrication d'un câble selon l'invention, caractérisé en ce que le procédé comprend au moins l'étape d'irradier la composition photoréticulable sous rayonnements ultraviolet, pour obtenir la couche réticulée.

Plus particulièrement, l'invention concerne un procédé de fabrication d'un câble selon l'invention, caractérisé en ce que le procédé comprend les étapes suivantes :
i) extruder une composition photoréticulable selon l'invention pour obtenir une couche extrudée, et
ii) réticuler ladite couche extrudée par rayonnement ultraviolet.

Avantageusement, l'irradiation sous rayonnement ultraviolet de la couche extrudée peut s'effectuer de façon continue, directement après l'étape d'extrusion de la composition.

De préférence, l'étape ii est réalisée sur la couche extrudée avec un matériau polymère en phase fondue. En d'autres termes, la réticulation par rayonnement ultraviolet est effectuée sur la couche extrudée avec une température supérieure ou égale à celle de la température de fusion du matériau polymère. En effet, les rayonnements UV sont ainsi plus pénétrants dans le matériau en phase fondue puisque les structures « amorphes » sont classiquement plus pénétrantes aux rayonnements UV que ne le sont les structures « cristallines ».

Dans la présente invention, la température de fusion des polymères peut être classiquement mesurée au pic de fusion dudit polymère par analyse calorimétrique différentielle (DSC) avec une rampe de température de 10°C/min, sous atmosphère d'azote.

La réticulation par voie photochimique est facile à mettre en œuvre et la productivité de ce type de procédé en est nettement améliorée.

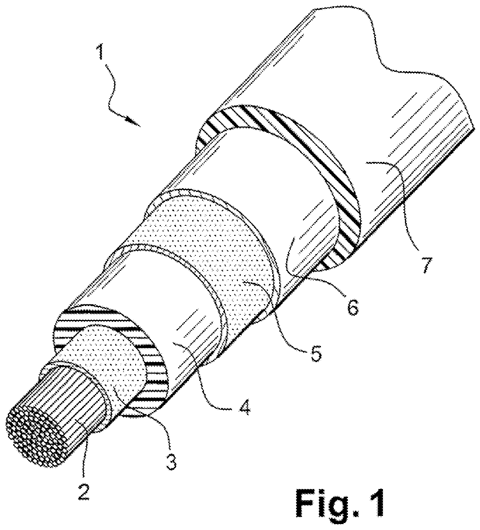

D'autres caractéristiques et avantages de la présente invention apparaîtront à la lumière de la description d'un exemple non limitatif d'un câble selon l'invention fait en référence à l'unique figure 1.

La figure 1 représente une vue schématique en coupe transversale d'un câble électrique selon un mode de réalisation préféré conforme à l'invention.

Pour des raisons de clarté, seuls les éléments essentiels pour la compréhension de l'invention ont été représentés de manière schématique, et ceci sans respect de l'échelle.

Le câble d'énergie 1 à moyenne ou haute tension, illustré dans la figure 1, comprend un élément conducteur électrique 2 central allongé, notamment en cuivre ou en aluminium. Le câble d'énergie 1 comprend en outre plusieurs couches disposées successivement et coaxialement autour de cet élément conducteur 2, à savoir : une première couche 3 semi-conductrice dite « couche semi-conductrice interne », une couche 4 électriquement isolante, une deuxième couche 5 semi-conductrice dite « couche semi-conductrice externe », un écran métallique 6 de mise à la terre et/ou de protection, et une gaine extérieure de protection 7.

La couche 4 électriquement isolante est une couche extrudée et réticulée, obtenue à partir de la composition photoréticulable selon l'invention.

Les couches semi-conductrices sont également des couches extrudées et réticulées, pouvant être obtenues à partir de la composition photoréticulable selon l'invention.

La présence de l'écran métallique 6 et de la gaine extérieure de protection 7 est préférentielle, mais non essentielle, cette structure de câble étant en tant que telle bien connue de l'homme du métier.

### Exemples

### 1. Compositions électriquement isolantes non chargées

Le tableau 1 ci-dessous rassemble des compositions photoréticulables non chargées dont les quantités des composés sont exprimées en parties en poids pour 100 parties en poids de matériau polymère (A).

Le matériau polymère dans le tableau 1 est composé soit d'un unique polyéthylène (LDPE), soit d'un mélange d'un polyéthylène (LDPE ou HDPE) et d'un polymère fonctionnalisé (E-MA-GMA).

Les compositions I1 à I5 et C1 sont conformes à l'invention.

**Tableau 1**

| Compositions photoréticulables | | I1 | I2 | I3 | I4 | I5 | C1 |
|---|---|---|---|---|---|---|---|
| Matériau polymère (A) | LDPE | 100 | 50 | 100 | 100 | 0 | 0 |
| | HDPE | 0 | 0 | 0 | 0 | 50 | 50 |
| | E-MA-GMA | 0 | 50 | 0 | 0 | 50 | 50 |
| Photoamorceur 1 (B) | | 1,7 | 1,7 | 0 | 0 | 0 | 0 |
| Photoamorceur 2 (B) | | 0 | 0 | 1,7 | 1,5 | 1,5 | 1,5 |
| Agent réticulant (C) | | 6,8 | 6,8 | 6,8 | 1 | 1 | 1 |
| Sel d'onium | | 0 | 0 | 0 | 0 | 0 | 2 |

L'origine des composés du tableau 1 est la suivante :
- LDPE est un polymère d'éthylène basse densité, commercialisé par la société Membrana sous la référence Accurel MP400-LDPE, dont la température de fusion est d'environ 123°C ;
- HDPE est un polymère d'éthylène haute densité, commercialisé par la société Membrana sous la référence Accurel MP200-HDPE, dont la température de fusion est d'environ 118°C ;
- E-MA-GMA est un terpolymère d'éthylène, de méthyl acrylate et de méthacrylate de glycidyl, commercialisé par la société ARKEMA sous la référence Lotader AX 8900, dont la température de fusion est d'environ 65°C;
- Photoamorceur 1 est la dibenzosubérone, commercialisée par la société Aceto sous la référence Dibenzosuberone, dont la température de fusion est d'environ 33°C ;
- Photoamorceur 2 est la benzophénone, commercialisée par la société Sigma Aldrich sous la référence Benzophenone, dont la température de fusion est d'environ 49°C ;
- Agent réticulant est le N,N'-1,3-phenylene bismaléimide, commercialisé par la société Dupont sous la référence HVA2 ; et
- Sel d'onium est le hexafluorophosphate de triallylsulfonium, commercialisé par la société Sigma Aldrich sous la référence Hexafluorophosphate de triallylsulfonium.

### 2. Préparation des couches réticulées

Les compositions rassemblées dans le tableau 1 sont mises en œuvre comme suit.

Les polymères sont introduits dans un mélangeur interne de type Brabender. La température de consigne du mélangeur est de 130°C. Les autres constituants sont ensuite introduits, à savoir le photoamorceur, l'agent réticulant, et le sel d'onium lorsqu'il existe.

Le mélange est ensuite passé sur un mélangeur à cylindres pour former des préformes, ces préformes étant ensuite moulées a 160°C, à l'aide d'une presse, sous une pression de 100 bar, en plaques d'épaisseur constante d'environ 500 microns.

Lors de l'exposition aux rayonnements ultraviolets, lesdites plaques doivent être maintenues à une température supérieure ou égale à la température de fusion du matériau polymère, permettant ainsi aux rayonnements ultraviolets d'être plus pénétrants dans le matériau.

Les plaques ainsi formées sont ensuite irradiées immédiatement par des rayonnements ultraviolets à l'aide d'une lampe UV, en passant dans un convoyeur UV.

La lampe UV utilisée est une lampe de type D, commercialisée par la société Fusion UV, ayant une longueur d'onde comprise entre 360 et 390 nm, et une intensité d'irradiation de 240 W/m.

Le convoyeur utilisé est commercialisé par la société Fusion UV sous la référence LC6E, et a une vitesse de défilement de 2 m/min.

L'exposition des plaques aux rayonnements UV est de l'ordre de 5 secondes, et la distance entre la lampe UV et les plaques est de l'ordre de 5 cm.

La largeur des plaques est bien entendu adaptée à la surface de rayonnements UV émis. En d'autres termes, la largueur des plaques est inférieure ou égale à la surface de rayonnements UV afin que les plaques puissent être exposées dans toute leur largeur auxdits rayonnements.

Bien entendu, la distance entre la lampe UV et le matériau à réticuler peut être adaptée en fonction de la vitesse de défilement du matériau et le type de lampe UV utilisée. Par exemple, en prenant la lampe de type D utilisée ci-dessus, la distance entre la lampe et le matériau réticulable peut être diminuée lorsque la vitesse de défilement du matériau sous la lampe UV est augmentée, ce qui est notamment le cas lorsque la composition photoréticulable est extrudée sur un fil conducteur métallique, le fil ayant une vitesse de défilement bien supérieure à 2 m/min.

### 3. Caractérisation des couches réticulées

La résistance à la traction, l'allongement à la rupture et le taux de gel ont été mesurés à partir des plaques formées ci-avant selon les normes suivantes :
- la résistance à la traction a été déterminée selon la norme NF EN 60811-1-1, et mesurée à l'aide d'un dynamomètre sur des éprouvettes de type H2 haltère ;
- l'allongement à la rupture a été déterminée selon la norme NF EN 60811-1-1 et mesurée à l'aide d'un dynamomètre sur des éprouvettes de type H2 haltère ; et
- le taux de gel a été déterminé selon la norme ASTM D2765-01 (extraction au xylène).

### 4. Résultats

Les résultats obtenus sont rassemblés dans le tableau 2 ci-dessous.

**Tableau 2**

| Compositions photoréticulables | I1 | I2 | I3 | I4 | I5 | C1 |
|---|---|---|---|---|---|---|
| Résistance à la traction (MPa) | 11,6 | 6,9 | 12,0 | 14,9 | 15,1 | 18,0 |
| Allongement à la rupture (%) | 217 | 214 | 307 | 446 | 475 | 326 |
| Taux de gel (%) | 35 | 39 | 42 | 60 | 75 | 65 |

Au regard des résultats rassemblés dans le tableau 2, les compositions photoréticulables de l'invention (I1 à I5), qui sont des compositions simples et faciles à mettre en œuvre dans le domaine de la câblerie, présentent toutes de très bonnes propriétés mécaniques une fois réticulées, notamment en termes d'allongement à la rupture.

On remarque en outre que l'ajout d'un sel d'onium dans la composition photoréticulable à un impact négatif sur l'allongement à la rupture et le taux de gel. En effet, la composition C1, qui comprend 2 parties en poids de sel d'onium pour 100 parties en poids de matériau polymère, présente, une fois réticulée, une baisse significative de l'allongement à la rupture et du taux de gel (allongement à la rupture de 326% et taux de gel de 65%) par rapport à la composition I5 selon l'invention (allongement à la rupture de 475% et taux de gel de 75%), pour une résistance à la traction sensiblement équivalente.

## Revendications

1. Câble (1) comprenant un élément conducteur allongé (2) entouré par au moins une couche réticulée (3, 4, 5) obtenue à partir d'une composition photoréticulable comprenant :
- au moins un matériau polymère (A),
- au moins un photoamorceur (B), et
- au moins un agent réticulant (C),
**caractérisé en ce que** l'agent réticulant (C) comprend au moins une fonction imide.

2. Câble selon la revendication 1, **caractérisé en ce que** l'agent réticulant (C) est un imide secondaire cyclique.

3. Câble selon la revendication 1 ou 2, **caractérisé en ce que** l'agent réticulant (C) est un dérivé du maléimide.

4. Câble selon l'une quelconque des revendications précédentes, **caractérisé en ce que** l'agent réticulant (C) est le N,N'-1,3-phenylene bismaléimide.

5. Câble selon l'une quelconque des revendications précédentes, **caractérisé en ce que** la composition photoréticulable comprend de 0,1 à 15,0 parties en poids d'agent de réticulation C pour 100 parties en poids de matériau polymère A.

6. Câble selon l'une quelconque des revendications précédentes, **caractérisé en ce que** le matériau polymère A comprend un ou plusieurs polymères d'oléfine.

7. Câble selon l'une quelconque des revendications précédentes, **caractérisé en ce que** le matériau polymère A comprend un polymère d'oléfine fonctionnalisé avec des fonctions époxy.

8. Câble selon l'une quelconque des revendications précédentes, **caractérisé en ce que** le photoamorceur B est une cétone aromatique.

9. Câble selon l'une quelconque des revendications précédentes, **caractérisé en ce que** la composition photoréticulable comprend moins de 0,1% en poids de sel d'onium par rapport au poids total de la composition.

10. Câble selon l'une quelconque des revendications précédentes, **caractérisé en ce que** la couche réticulée est une couche extrudée.

11. Câble selon l'une quelconque des revendications précédentes, **caractérisé en ce que** la couche réticulée est une couche électriquement isolante.

12. Câble selon l'une quelconque des revendications précédentes, **caractérisé en ce que** l'élément conducteur allongé (2) est entouré par une première couche semi-conductrice (3), une couche électriquement isolante (4) entourant la première couche semi-conductrice, et une deuxième couche semi-conductrice (5) entourant la couche électriquement isolante, la couche réticulée étant au moins l'une de ces trois couches, et de préférence la couche réticulée est la couche électriquement isolante (4).

13. Procédé de fabrication d'un câble selon l'une quelconque des revendications précédentes, **caractérisé en ce que** le procédé comprend au moins l'étape d'irradier la composition photoréticulable sous rayonnements ultraviolet, pour obtenir la couche réticulée.

## Patentansprüche

1. Kabel (1), umfassend ein verlängertes leitendes Element (2), das von mindestens einer vernetzten Schicht (3, 4, 5) umgeben ist, erhalten aus einer photovernetzbaren Schicht, umfassend:
- mindestens ein Polymermaterial (A),
- mindestens einen Photoinitiator (B), und
- mindestens ein Vernetzungsmittel (C),
**dadurch gekennzeichnet, dass** das Vernetzungsmittel (C) mindestens eine Imidfunktion umfasst.

2. Kabel nach Anspruch 1, **dadurch gekennzeichnet, dass** das Vernetzungsmittel (C) ein sekundäres cyclisches Imid ist.

3. Kabel nach Anspruch 1 oder 2, **dadurch gekennzeichnet, dass** das Vernetzungsmittel (C) ein Derivat des Maleimids ist.

4. Kabel nach einem der vorhergehenden Ansprüche, **dadurch gekennzeichnet, dass** das Vernetzungsmittel (C) N,N'-1,3-Phenylenbismaleimid ist.

5. Kabel nach einem der vorhergehenden Ansprüche, **dadurch gekennzeichnet, dass** die photovernetzbare Zusammensetzung von 0,1 bis 15,0 Gewichtsteile Vernetzungsmittel C für 100 Gewichtsteile Polymermaterial A umfasst.

6. Kabel nach einem der vorhergehenden Ansprüche, **dadurch gekennzeichnet, dass** das Polymermaterial A ein oder mehrere Olefinpolymere umfasst.

7. Kabel nach einem der vorhergehenden Ansprüche, **dadurch gekennzeichnet, dass** das Polymermaterial A ein Olefinpolymer, funktionalisiert mit Epoxyfunktionen, umfasst.

8. Kabel nach einem der vorhergehenden Ansprüche, **dadurch gekennzeichnet, dass** der Photoinitiator B ein aromatisches Keton ist.

9. Kabel nach einem der vorhergehenden Ansprüche, **dadurch gekennzeichnet, dass** die photovernetzbare Zusammensetzung mindestens 0,1 Gew% Oniumsalz mit Bezug auf das Gesamtgewicht der Zusammensetzung umfasst.

10. Kabel nach einem der vorhergehenden Ansprüche, **dadurch gekennzeichnet, dass** die vernetzte Schicht eine extrudierte Schicht ist.

11. Kabel nach einem der vorhergehenden Ansprüche, **dadurch gekennzeichnet, dass** die vernetzte Schicht eine elektrisch isolierende Schicht ist.

12. Kabel nach einem der vorhergehenden Ansprüche, **dadurch gekennzeichnet, dass** das verlängerte leitende Element (2) durch eine erste halbleitende Schicht (3), eine elektrisch isolierende Schicht (4), die die erste halbleitende Schicht umgibt, und eine zweite halbleitende Schicht (5), die die elektrisch isolierende Schicht umgibt, umgeben ist, wobei die vernetzte Schicht mindestens eine dieser drei Schichten ist und vorzugsweise die vernetzte Schicht die elektrisch isolierende Schicht (4) ist.

13. Verfahren zur Herstellung eines Kabels nach einem der vorhergehenden Ansprüche, **dadurch gekennzeichnet, dass** das Verfahren mindestens den Schritt des Bestrahlens der photovernetzbaren Zusammensetzung unter ultravioletter Bestrahlung umfasst, um die vernetzte Schicht zu erhalten.

## Claims

1. A cable (1) comprising an elongated conductive element (2) surrounded by at least one cross-linked layer (3, 4, 5) obtained from a cross-linkable composition comprising:
- at least one polymer material (A),
- at least one photoinitiator (B), and
- at least one cross-linking agent (C),
**characterized in that** the cross-linking agent (C) comprises at least one imide function.

2. The cable according to claim 1, **characterized in that** the cross-linking agent (C) is a cyclic secondary imide.

3. The cable according to claim 1 or 2, **characterized in that** the cross-linking agent (C) is a derivative of maleimide.

4. The cable according to any one of the preceding claims, **characterized in that** the cross-linking agent (C) is N,N'-1,3-phenylene bismaleimide.

5. The cable according to any one of the preceding claims, **characterized in that** the cross-linkable composition comprises from 0.1 to 15.0 parts by weight of cross-linking agent C for 100 parts by weight of polymer material A.

6. The cable according to any one of the preceding claims, **characterized in that** the polymer material A comprises one or several olefin polymers.

7. The cable according to any one of the preceding claims, **characterized in that** the polymer material A comprises an olefin polymer functionalized with epoxy functions.

8. The cable according to any one of the preceding claims, **characterized in that** the photoinitiator B is an aromatic ketone.

9. The cable according to any one of the preceding claims, **characterized in that** the cross-linkable composition comprises less than 0.1% by weight of onium salt relative to the total weight of the composition.

10. The cable according to any one of the preceding claims, **characterized in that** the cross-linked layer is an extruded layer.

11. The cable according to any one of the preceding claims, **characterized in that** the cross-linked layer is an electrically insulating layer.

12. The cable according to any one of the preceding claims, **characterized in that** the elongated conductive element (2) is surrounded by a first semi-conductive layer (3), an electrically insulating layer (4) surrounding the first semi-conductive layer, and a second semi-conductive layer (5) surrounding the electrically insulating layer, the cross-linked layer being at least one of these three layers, and preferably the cross-linked layer is the electrically insulating layer (4).

13. A method for manufacturing a cable according to any one of the preceding claims, **characterized in that** the method comprises at least the step of irradiating the cross-linkable composition under ultraviolet radiation, in order to obtain the cross-linked layer.
